# EUROPEAN PATENT SPECIFICATION

(11) **EP 3 310 831 B1**
(45) Date of publication and mention of the grant of the patent: **11.09.2019**
(21) Application number: 16732101.7
(22) Date of filing: 09.06.2016
(51) Int. Cl.: C08G 18/48, C08G 18/63, C08G 18/76, C08G 18/16, C08G 18/18, C08G 18/24, C08G 18/40, C08L 75/08

(54) **VISCOELASTIC POLYURETHANE FOAM WITH AQUEOUS POLYMER DISPERSANT**
VISKOELASTISCHER POLYURETHANSCHAUM MIT WÄSSRIGEM POLYMERDISPERSIONSMITTEL
MOUSSE POLYURÉTHANE VISCOÉLASTIQUE CONTENANT UN DISPERSANT POLYMÈRE AQUEUX

(30) Priority: 18.06.2015 US 201562181367 P
(43) Date of publication of application: 25.04.2018
(73) Proprietor: Dow Global Technologies LLC, Midland, MI 48674 (US); Rohm and Haas Company, Philadelphia, PA 19106 (US)
(72) Inventor: AOU, Kaoru, Freeport, TX 77541 (US); KALANTAR, Thomas H., Midland, MI 48674 (US); MENG, Qinghao, Freeport, TX 77541 (US); KLIER, John, Leverett, MA 01054 (US); VAN DYK, Antony K., Collegeville, PA 19426 (US); DOMBROWSKI, Gary W., Collegeville, PA 19426 (US); JACOBS, Joseph, Collegeville, PA 19426 (US)
(74) Representative: Beck Greener LLP
(86) International application number: PCT/US2016/036603
(87) International publication number: WO 2016/205054

(56) References cited:
- EP-A1- 2 476 714
- WO-A1-03/046041
- WO-A1-2008/089411
- WO-A1-2011/163113
- JP-A- 2001 323 155
- US-A1- 2005 027 026

## Description

### Field

Embodiments relate to viscoelastic polyurethane foams prepared using a preformed aqueous acid polymer dispersant and a method of manufacturing such viscoelastic polyurethane foams.

### Introduction

Flexible, viscoelastic polyurethane foam (also known as slow-recovery foam and high-damping foam) is characterized by relatively slow, gradual recovery from compression and the viscoelastic foam may have a relatively lower resiliency. Exemplary applications for viscoelastic foam utilize the foam's characteristics such as shape conforming, energy attenuating, and/or sound damping. For example, the viscoelastic polyurethane foam may be used in comfort applications (such as bedding and pillows), shock absorbing applications (such as in athletic padding and helmets), and in soundproof applications (such as automotive interiors).

### Summary

Embodiments may be realized by providing a reaction system for forming a viscoelastic polyurethane foam that has a resiliency of less than or equal to 20 % as measured according to ASTM D 3574, and a method of forming the viscoelastic polyurethane foam. The reaction system has an isocyanate component that includes at least one isocyanate, at an isocyanate index of the reaction system being from 50 to 110, and an isocyanate-reactive component that is a mixture including at least a polyol component, an additive component, and a preformed aqueous polymer dispersant. The mixture includes from 50.0 wt% to 99.8 wt% of the polyol component, based on the total weight of the mixture, the polyol component including at least one polyether polyol, from 0.1 wt% to 49.9 wt% of the additive component, based on the total weight of the mixture, that includes at least one catalyst, and from 0.1 wt% to 6.0 wt%, of the preformed aqueous polymer dispersant, based on the total weight of the mixture. The preformed aqueous polymer dispersant has a pH from 6.0 to 12.0 and includes from 5 wt% to 60 wt% of a polymeric component and from 40 wt% to 95 wt% of a fluid medium that includes at least water. The polymeric component includes at least one base polymer derived from 20 wt% to 100 wt% of at least one hydrophilic acid monomer having at least one carbonyl group, phosphate group, phosphonate group, or sulfonyl group, and optionally derived from at least one hydrophobic terminally unsaturated hydrocarbon monomer.

### Detailed Description

A viscoelastic polyurethane foam may be characterized as having a resiliency that is less than or equal to 20 % as measured according to ASTM D 3574 (may also be referred to as a Ball Rebound Test). For example, the resiliency may be less than 15%, less than 10%, less than 8%, and/or less than 7 wt%. The resiliency may be greater than 1%. Viscoelastic polyurethane foams may be prepared using a reaction system that includes an isocyanate component and an isocyanate-reactive component. In particular, the viscoelastic foam is formed as the reaction product of the isocyanate component and the isocyanate-reactive component. The isocyanate component includes at least one isocyanate such as an isocyanate-terminated prepolymer and/or a polyisocyanate. The isocyanate-reactive component includes at least one compound having an isocyanate reactive hydrogen atom group, such as a hydroxyl group and/or an amine group. The isocyanate component and/or the isocyanate-reactive component may include an additive such a catalyst, a curing agent, a surfactant, a blowing agent, a polyamine, and/or a filler.

According to embodiments, the isocyanate-reactive component includes at least three components. In particular, the isocyanate-reactive component includes a polyol component, an additive component, and a preformed aqueous polymer dispersant.

The polyol component accounts for 50.0 wt% to 99.8 wt% (e.g., 60.0 wt% to 99.8 wt%, 70.0 wt% to 99.5 wt%, 80.0 wt% to 99.0 wt%, 90.0 wt% to 99.0 wt%, etc., so as to be the majority component in the reaction system for forming the viscoelastic polyurethane foam) of the isocyanate-reactive component. The polyol component includes at least one polyether polyol and may optionally include at least one polyester polyol.

The additive component may include a catalyst, a curing agent, a surfactant (such as a silicone surfactant), a blowing agent, a polyamine, water, and/or a filler. The additive component accounts for 0.1 wt% to 49.9 wt% (e.g., 0.1 wt% to 40.0 wt%, 0.1 wt% to 30.0 wt%, 0.1 wt% to 20.0 wt%, 0.1 wt% to 15.0 wt%, 0.1 wt% to 10.0 wt%, 0.1 wt% to 5.0 wt%, etc.) of the additive component, based on the total weight of the isocyanate-reactive component. The additive component in exemplary embodiments includes at least one catalyst and at least one surfactant.

The preformed aqueous polymer dispersant accounts for 0.1 wt% to 6.0 wt% (e.g., 0.1 wt% to 5.0 wt%, 0.1 wt% to 4.1 wt%, 0.1 wt% to 4.0 wt%, 0.1 wt% to 3.5 wt%, 0.1 wt% to 3.0 wt%, 0.4 wt% to 2.5 wt%, 0.5 wt% to 2.4 wt%, etc.) of the isocyanate-reactive component. The preformed aqueous polymer dispersant is an aqueous acid-polymer dispersant in which the polymer is derived from of at least one hydrophilic acid monomer having a number average molecular weight from 1,000 g/mol to 25,000 g/mol. The preformed aqueous polymer dispersant has a solids content from 10 wt% to 80 wt%, based on the total weight of the preformed aqueous polymer dispersant. The aqueous polymer dispersant may be a combination of one or more aqueous polymer dispersants that are used to form the viscoelastic polyurethane foam. The dispersant may be capable of promoting the formation and/or stabilization of mixture of two components.

The viscoelastic foam prepared using the preformed aqueous polymer dispersant additive may have an air flow greater than 4.0 standard cubic foot per minute (scfm) (approximately 2.4 L/s) under standard conditions. For example, the air flow may be greater than 4.5 scfm and/or greater than 5.0 scfm. The air flow may be less than 15 scfm. For example, a viscoelastic polyurethane foam may be prepared that has an increased air flow without sacrificing resiliency.

### Preformed Aqueous Polymer Dispersant

The preformed aqueous polymer dispersant includes at least (a) a polymeric component that includes a base polymer that is derived from 20 wt% to 100 wt% (e.g., 30 wt% to 100 wt%, 40 wt% to 100 wt%, 50 wt% to 100 wt%, etc.) of at least one hydrophilic acid monomer having at least one carbonyl group, phosphate group, phosphonate group, or sulfonyl group, or other acidic groups (which includes any combination thereof), and optionally derived from at least one hydrophobic terminally unsaturated hydrocarbon monomer; and (b) a fluid medium that includes at least water, in which the base polymer is dispersed in the fluid medium. As used herein, by polymer it meant a compound prepared by polymerizing monomers, whether of the same or a different type. Thus, the term polymer embraces the term homopolymer, usually employed to refer to polymers prepared from only one type of monomer, and the term interpolymer. It also embraces all forms of interpolymers, e.g., random, block, homogeneous, heterogeneous, etc. By copolymer/interpolymer it is meant a polymer prepared by the polymerization of at least two different types of monomers. These terms include both classical copolymers, i.e., polymers prepared from two different types of monomers, and polymers prepared from more than two different types of monomers, e.g., terpolymers, tetrapolymers, etc. The base polymer may be derived from one monomer or may be a copolymer derived from at least two different monomers. The base polymer may have controlled microstructure, molecular weight distribution, and/or molecular weight. The base polymer may have a number average molecular weight (Mₙ) from 1000 to 25,000 g/mol.

Mₙ refers to the number average molecular weight of the dispersant, e.g., as determined by any the following method: dispersants are dissolved at a concentration of 2 mg/mL in a 20 mM solution of sodium dihydrogen phosphate at pH 7 and passed through a 0.45 µm filter and 100 µL injected into a TSKgel GMPW XL packed column (7.5 mm x 30 cm, Tosoh) in tandem with a TSKgel G2500PW XL packed column (7.5 mm x 30 cm, Tosoh) at a flow rate of 1 mL/min. The elution is monitored by a refractive index detector and molecular weight profile assessed versus poly(acrylic acid) reference standards ranging in molecular weight from 216 g/mol to 1,100,000 g/mol.

For example, the base polymer may be derived from at least one hydrophilic acid monomer having at least one carbonyl group, e.g., derived from an ethylenically unsaturated carboxylated monomer or derived from a monomer that can be hydrolyzed to give multiple carboxylic acid functional groups. Examples of ethylenically unsaturated carboxylated monomers include acrylic acid, crotonic acid, methacrylic acid, cinnamic acid, alpha-chloroacrylic acid, maleic acid, itaconic acid, fumaric acid, glutaconic acid, traumatic acid, citraconic acid, mesaconic acid, and aconitic acid. Examples of monomers that can be hydrolyzed to give multiple carboxylic acid functional groups include maleic anhydride, citraconic anhydride, itaconic anhydride, tetrahydrophthalic anhydride, traumatic anhydride, and glutaconic anhydride. For example, the monomers that can be hydrolyzed to give multiple carboxylic acid functional groups may be an acid anhydride. In exemplary embodiments, the hydrophilic acid monomer may be a carboxylic acid having more than one carbonyl group or an acid anhydride.

The base polymer may be derived from at least one hydrophilic acid monomer having at least one phosphate group, e.g., derived from phosphoric acid or esters thereof (e.g., ones known to a person of ordinary skill in the art). The base polymer may be derived from at least one hydrophilic acid monomer having at least one phosphonate group, e.g., derived from phosphonic acids or esters thereof (e.g., ones known to a person of ordinary skill in the art). The base polymer may be derived from at least one hydrophilic acid monomer having at least one sulfonyl group, e.g., derived from sulfonic acid or substituents obtained from sulfonic acid (e.g., ones known to a person of ordinary skill in the art).

In exemplary embodiments, the base polymer may be derived from any combination of the hydrophilic acid monomers having at least one carbonyl group (such as an acid anhydride group) phosphate group, phosphonate group, or sulfonyl group. For example, the base polymer may be a copolymer derived from two different hydrophilic acid monomers, e.g., derived from two different ethylenically unsaturated carboxylated monomers, derived from two different monomers that can be hydrolyzed to give multiple carboxylic acid functional groups. For example, the base polymer may be derived from one ethylenically unsaturated carboxylated monomer and one monomer that can be hydrolyzed to give multiple carboxylic acid functional groups.

In further exemplary embodiments, the base polymer may be derived from any combination of the of the hydrophilic acid monomers having at least one carbonyl group (such as an acid anhydride group), phosphate group, phosphonate group, or sulfonyl group, and a hydrophobic terminally unsaturated hydrocarbon monomer. For example, the base polymer may be derived from one monomer that can be hydrolyzed to give multiple carboxylic acid functional groups and one hydrophobic terminally unsaturated hydrocarbon monomer.

Examples of the hydrophobic terminally unsaturated hydrocarbon monomers include C₂ to C₂₀ alpha-olefins, ethylenically unsaturated aromatic compounds (such as styrene), and alkyl esters of ethylenically unsaturated carboxylated monomers (such as methyl acrylate, ethyl acrylate, butyl acrylate, methyl methacrylate, ethyl methacrylate, and butyl methacrylate). For example, the hydrophobic terminally unsaturated hydrocarbon monomer may be one of selected from a C₂ to C₁₀ alphaolefin or may be styrene. Nonlimiting examples of a sulfonated ethylenically unsaturated monomer include 2-acrylamido-2-methylpropane sulfonic acid and its salts. Nonlimiting examples of a phosphated ethylenically unsaturated monomer include 2-(phosphonooxy)ethyl methacrylate and its salts. Nonlimiting examples of a phosphonated ethylenically unsaturated monomer include vinylphosphonic acid and its salts. Exemplary embodiments include at least one ethylenically unsaturated carboxylated monomers.

The preformed aqueous polymer dispersant includes from 5 wt% to 60 wt% (e.g., 5 wt% to 50 wt%, 10 wt% to 50 wt%, 15 wt% to 45 wt%, 15 wt% to 40 wt%, 20 wt% to 36 wt%, etc.) of a polymeric component and from 40 wt% to 95 wt% of a fluid medium that includes at least water. For example, the preformed aqueous polymer dispersant may consist essentially of the polymeric component and the fluid medium. The polymeric component may consist essentially of the base polymer. The preformed aqueous polymer dispersant may contain other components, non-limiting examples include surfactants, organic solvents, initiator and chain transfer residues, and fillers.

The preformed aqueous polymer dispersant has a pH from 6.0 to 12.0 (e.g., from 6.5 to 12.0, from 8.0 to 12.0, from 8.0 to 11.5, from 8.0 to 11.0, from 8.0 to 10.5, from 8.0 to 10.0, etc.). The preformed aqueous polymer dispersant may be a continuous liquid phase component at ambient conditions of room temperature and atmospheric pressure and is derived from a liquid phase (i.e., the fluid medium) and a solid phase (i.e., the base polymer). The preformed aqueous polymer dispersant may have a solids content from 10 wt% to 80 wt% (e.g., from 25 wt% to 75 wt%, etc.), based on the total weight of the preformed aqueous polymer dispersant.

The aqueous polymer dispersant may be prepared by using a neutralizing agent. Exemplary neutralizing agents include ammonia, ammonium hydroxide, potassium hydroxide, sodium hydroxide, lithium hydroxide, calcium hydroxide, magnesium hydroxide, zinc hydroxide, calcium oxide, magnesium oxide, zinc oxide, and combinations thereof. For example, if a polar group of the base polymer is acidic or basic in nature, the polymer may be partially or fully neutralized with a neutralizing agent to form a corresponding salt. For example, with a dispersant prepared using acrylic acid, the neutralizing agent is a base, such as ammonium hydroxide, potassium hydroxide, and/or sodium hydroxide. Those having ordinary skill in the art will appreciate that the selection of an appropriate neutralizing agent may depend on the specific composition formulated, and that such a choice is within the knowledge of those of ordinary skill in the art.

The preformed aqueous polymer dispersant accounts for 0.1 wt% to 6.0 wt% (e.g., 0.1 wt% to 5.0 wt%, 0.1 wt% to 4.1 wt%, 0.1 wt% to 4.0 wt%, 0.1 wt% to 3.5 wt%, 0.1 wt% to 3.0 wt%, 0.4 wt% to 2.5 wt%, 0.5 wt% to 2.4 wt%, etc.) of the isocyanate-reactive component. The aqueous polymer dispersant may be a combination of one or more aqueous polymer dispersants that are used to form the viscoelastic polyurethane foam.

The calculated total water content for the reaction system used to form the viscoelastic foam may be less than 5 wt%, less than 3 wt%, less than 2.0 wt%, and/or less than 1.6 wt%, based on the total weight of the reaction system for forming the viscoelastic polyurethane foam. The calculated total water content is calculated as the total amount of DI (deionized) water added to the formulation plus the amount of water added to the formulation as part of the preformed aqueous polymer dispersant. For example, the calculated total water content may be from 0.5 wt% to 1.6 wt%, 0.5 wt% to 1.5 wt%, and/or 1.0 wt% to 1.5 wt%.

Exemplary aqueous polymer dispersants are sold as TAMOL™ and OROTAN™, products, available from The Dow Chemical Company, and BYK and DISPERBYK products, available from BYK gmbh, and Rhodaline® products, available from Rhodia Group, and Coadis™ products, available from Arkema, and Hydropalat® products, available from BASF.

### Polyol Component

The polyol component includes at least one polyether polyol and/or polyester polyol. Exemplary polyether polyols are the reaction product of alkylene oxides (such as at least one ethylene oxide, propylene oxide, and/or butylene oxide) with initiators containing from 2 to 8 active hydrogen atoms per molecule. Exemplary initiators include ethylene glycol, diethylene glycol, propylene glycol, dipropylene glycol, butane diol, glycerol, trimethylolpropane, triethanolamine, pentaerythritol, sorbitol, ethylene diamine, toluene diamine, diaminodiphenylmethane, polymethylene polyphenylene polyamines, ethanolamine, diethanolamine, and mixtures of such initiators. Exemplary polyols include VORANOL™ products, available from The Dow Chemical Company. The polyol component may include polyols that are useable to form viscoelastic polyurethane foams.

For example, the polyol component may include a polyoxyethylene-polyoxypropylene polyether polyol that has an ethylene oxide content of at least 50 wt%, that has a nominal hydroxyl functionality from 2 to 6 (e.g., 2 to 4), and has a number average molecular weight from 500 g/mol to 5000 g/mol (e.g., 500 g/mol to 4000 g/mol, from 600 g/mol to 3000 g/mol, 600 g/mol to 2000 g/mol, 700 g/mol to 1500 g/mol, and/or 800 g/mol to 1200 g/mol). The polyoxyethylene-polyoxypropylene polyether polyol that has an ethylene oxide content of at least 50 wt%. The polyoxyethylene-polyoxypropylene polyether polyol may account for 5 wt% to 90 wt% (e.g., 10 wt% to 90 wt%, 35 wt% to 90 wt%, 40 wt% to 85 wt%, 50 wt% to 85 wt%, 50 wt% to 80 wt%, and/or 55 wt% to 70 wt%) of the isocyanate-reactive component. The polyoxyethylene-polyoxypropylene polyether polyol that has an ethylene oxide content of at least 50 wt% (based on the total weight of alkylene oxide units from which the polyol is derived) may be the majority component in the isocyanate-reactive component.

The polyol component may include a polyoxypropylene-polyoxyethylene polyether polyol that has an ethylene oxide content of less than 20 wt% (based the total weight of the alkylene oxide units from which the polyol is derived) that has a nominal hydroxyl functionality from 2 to 6 (e.g., 2 to 4) and has a number average molecular weight greater than 1000 g/mol (or greater than 1500 g/mol) and less than 6000 g/mol. For example, the molecular weight may be from 1500 g/mol to 5000 g/mol, 1600 g/mol to 5000 g/mol, 2000 g/mol to 4000 g/mol, and/or 2500 g/mol to 3500 g/mol. The polyoxypropylene-polyoxyethylene polyether polyol that has an ethylene oxide content of less than 20 wt% may account for 5 wt% to 90 wt% (e.g., 5 wt% to 70 wt%, 5 wt% to 50 wt%, 10 wt% to 40 wt%, and/or 10 wt% to 30 wt%) of the isocyanate reactive component. The polyoxypropylene-polyoxyethylene polyether polyol that has an ethylene oxide content of less than 20 wt% may be in a blend with the polyoxypropylene polyether polyol that has an ethylene oxide content of at least 50 wt%, whereas the latter of which is included in a greater amount.

The polyol component may include a polyoxypropylene polyether polyol that has a nominal hydroxyl functionality from 2 to 6 (e.g., 2 to 4) and has a number average molecular weight from 500 g/mol to 5000 g/mol (e.g., 500 g/mol to 4000 g/mol, from 600 g/mol to 3000 g/mol, 600 g/mol to 2000 g/mol, 700 g/mol to 1500 g/mol, and/or 800 g/mol to 1200 g/mol). The polyoxypropylene polyether polyol may account for 5 wt% to 90 wt% (e.g., 5 wt% to 70 wt%, 5 wt% to 50 wt%, 10 wt% to 40 wt%, and/or 10 wt% to 30 wt%) of the isocyanate reactive component. The polyoxypropylene polyether polyol may be in a blend with the polyoxypropylene polyether polyol that has an ethylene oxide content of at least 50 wt%, whereas the latter of which is included in a greater amount.

In an exemplary embodiment, the polyol component may include a blend of the polyoxyethylene-polyoxypropylene polyether polyol that has an ethylene oxide content of at least 50 wt%, the polyoxyethylene-polyoxypropylene polyether polyol that has an ethylene oxide content of less than 20 wt%, and the polyoxypropylene polyether polyol.

The polyol component may be mixed with the preformed aqueous polymer dispersant (and optionally at least part of the additive component) before contacting the isocyanate component.

### Additive Component

The additive component is separate from the components that form the preformed aqueous dispersant and the polyol component. The additive component is part of the isocyanate-reactive component, but other additives may be incorporated into the isocyanate component. The additive component may include a catalyst, a curing agent, a crosslinker, a surfactant, a blowing agent (aqueous and non-aqueous, separate from the aqueous polymer dispersant), a polyamine, a plasticizer, a fragrance, a pigment, an antioxidant, a UV stabilizer, water (separate from the aqueous polymer dispersant), and/or a filler. Other exemplary additives include a chain extender, flame retardant, smoke suppressant, drying agent, talc, powder, mold release agent, rubber polymer ("gel") particles, and other additives that are known in the art for use in viscoelastic foams and viscoelastic foam products.

The additive component may include tin catalyst, zinc catalyst, bismuth catalyst, and/or amine catalyst. The total amount of catalyst in the isocyanate-reactive component may be from 0.1 wt% to 3.0 wt%.

A surfactant may be included in the additive component, e.g., to help stabilize the foam as it expands and cures. Examples of surfactants include nonionic surfactants and wetting agents such as those prepared by the sequential addition of propylene oxide and then ethylene oxide to propylene glycol, solid or liquid organosilicones, and polyethylene glycol ethers of long chain alcohols. Ionic surfactants such as tertiary amine or alkanolamine salts of long chain alkyl acid sulfate esters, alkyl sulfonic esters, and alkyl arylsulfonic acids may be used. For example, the formulation may include a surfactant such as an organosilicone surfactant. The total amount of an organosilicone surfactant in the isocyanate-reactive component may be from 0.1 wt% to 5.0 wt%, 0.1 wt% to 3.0 wt%, 0.1 wt% to 2.0 wt%, and/or 0.1 wt% to 1.0 wt%. The amount of the surfactant used may be less than the amount of the preformed aqueous polymer dispersant used.

The additive component may include water, which is separate from the preformed aqueous polymer dispersant. The water may account for less than 2.0 wt% of the total weight of isocyanate-reactive component. The total water, including water from the preformed aqueous polymer dispersant and water from the additive component, may account for less than 5 wt% of the total weight of isocyanate-reactive component.

The additive component may exclude any conventional polyurethane foam chemical cell openers based on the use of the aqueous polymer dispersant. The additive component may exclude polybutene, polybutadiene, and waxy aliphatic hydrocarbons such as oils (e.g., mineral oil, paraffin oil, and/or naphthenic oil) that are commonly employed cell openers in low resiliency foams. The additive component may exclude cell openers that are polyols derived primarily from alkoxylation of α,β-alkylene oxides having at least 4 carbon atoms, e.g., as discussed U.S. Patent No. 4,596,665. The additive component may exclude cell openers that are polyethers of up to about 3500 molecular weight that contain a high proportion (usually 50 percent or higher) of units derived from ethylene oxide or butylene oxide, e.g., as discussed in the background section of U.S. Patent No. 4,863,976. The additive component may exclude cell openers that are polyether polyols having a molecular weight of at least 5000 and having at least 50 wt% of oxyethylene units, e.g., as discussed in the claims of U.S. Patent No. 4,863,976.

### Isocyanate Component

The isocyanate component includes at least one isocyanate. The isocyanate component is present at an isocyanate index from 50 to 110 (e.g., from 60 to 100, from 65 to 100, from 70 to 100, from 74 to 100, from 70 to 90, from 70 to 85, and/or from 74 to 85). The isocyanate index is defined as the molar stoichiometric excess of isocyanate moieties in a reaction mixture with respect to the number of moles of isocyanate-reactive units (active hydrogens available for reaction with the isocyanate moiety), multiplied by 100. An isocyanate index of 100 means that there is no stoichiometric excess, such that there is 1.0 mole of isocyanate groups per 1.0 mole of isocyanate-reactive groups, multiplied by 100.

The isocyanate component may include one or more isocyanate such as polyisocyanate and/or isocyanate-terminated prepolymer. The isocyanate may be isocyanate-containing reactants that are aliphatic, cycloaliphatic, alicyclic, arylaliphatic, and/or aromatic polyisocyanates or derivatives thereof. Exemplary derivatives include allophanate, biuret, and NCO (isocyanate moiety) terminated prepolymer. For example, the isocyanate component may include at least one aromatic isocyanate, e.g., at least one aromatic polyisocyanate or at least one isocyanate-terminated prepolymer derived from an aromatic polyisocyanate. The isocyanate component may include as at least one isomer of toluene diisocyanate (TDI), crude TDI, at least one isomer of methylene diphenyl diisocyanate (MDI), crude MDI, and/or higher functional polymethylene polyphenyl polyisocyanate (also known as polymeric MDI or PMDI). Examples include TDI in the form of its 2,4 and 2,6-isomers and mixtures thereof and MDI in the form of its 2,4'-, 2,2'- and 4,4'-isomers and mixtures thereof. The mixtures of MDI and oligomers thereof may be crude or polymeric MDI and/or a known variant of MDI comprising urethane, allophanate, urea, biuret, carbodiimide, uretonimine and/or isocyanurate groups. Exemplary isocyanates include VORANATE™ M 220 (a polymeric methylene diphenyl diisocyanate available from The Dow Chemical Company). Other exemplary polyisocyanate include toluene diisocyanate (TDI), isophorone diisocyanate (IPDI) and xylene diisocyanates (XDI), and modifications thereof.

### Viscoelastic Foam

The viscoelastic polyurethane foam may be useful in a variety of packaging applications, comfort applications (such as mattresses - including mattress toppers, pillows, furniture, seat cushions, etc.) shock absorber applications (such as bumper pads, sport and medical equipment, helmet liners, etc.), and noise and/or vibration dampening applications (such as earplugs, automobile panels, etc.).

The viscoelastic polyurethane foam may be prepared in a slabstock process (e.g., as free rise foam), a molding process (such as in a box foaming process), or any other process known in the art. In a slabstock process, the components may be mixed and poured into a trough or other region where the formulation reacts, expands freely in at least one direction, and cures. Slabstock processes are generally operated continuously at commercial scales. In a molding process, the components may be mixed and poured into a mold/box (heated or non-heated) where the formulation reacts, expands without the mold in at least one direction, and cures.

The viscoelastic polyurethane foam may be prepared at initial ambient conditions (i.e., room temperature ranging from 20 °C to 25 °C and standard atmospheric pressure of approximately 1 atm). For example, the viscoelastic polyurethane foam may include an acid polymer and/or an acid-modified polyolefin polymer (e.g., a polymer that has a melting point above 100 °C) without requiring heating or application of pressure to the isocyanate-reactive component. Foaming at pressure below atmospheric condition can also be done, to reduce foam density and soften the foam. Foaming at pressure above atmospheric condition can be done, to increase foam density and therefore the foam load bearing as measured by indentation force deflection (IFD). In a molding processing, the viscoelastic polyurethane foam may be prepared at initial mold temperature above ambient condition, e.g., 50 °C and above. Overpacking of mold, i.e. filling the mold with extra foaming material, can be done to increase foam density.

The calculated total water content for the reaction system used to form the viscoelastic foam may be less than 5.0 wt%, less than 3.0 wt%, less than 2.0 wt%, and/or less than 1.6 wt%, based on the total weight of the reaction system for forming the viscoelastic polyurethane foam. The calculated total water content is calculated as the total amount of DI (deionized water) added to the formulation plus the amount of water added to the formulation as part of the preformed aqueous polymer dispersant. For example, the calculated total water content may be from 0.5 wt% to 1.6 wt%, 0.5 wt% to 1.5 wt%, and/or 1.0 wt% to 1.5 wt%.

The resultant viscoelastic polyurethane foam may exhibit improved wicking effect and/or improved moisture/heat management. With respect to moisture and heat management of a resultant foam, e.g., with respect to a viscoelastic polyurethane foam mattress or pillow, a good wicking effect may enable sweat to move quickly away from a user's skin. The key aspects of human body to maintain the comfort temperature are through moisture vapor by sweating. Sweating is the body's mechanism of keeping us cool. Good wicking effect may enable the user to remain dry and cool so as providing increased comfort. The good wicking effect may also provide the sweat/water with more surface area to evaporate from. Said in another way, as the sweat/water is dispersed over a greater area it may evaporate more rapidly than when the water is pooled together over a small surface area. Further, good moisture permeability may enable moisture to leave a user's skin and enable natural moisture vapor to bring heat away from the user's skin.

All parts and percentages are by weight unless otherwise indicated. All molecular weight data is based on number average molecular weight, unless indicated otherwise.

### Examples

The data and descriptive information provided herein are based on approximations. Further, the materials principally used are as the following:

| | |
|---|---|
| AD 1 | A liquid preformed aqueous polymer dispersant that includes 21.0% to 23.0% of proprietary polycarboxylate, ammonium salt and 77.0% to 79.0% of water, and that has a pH from 8.5 to 9.0 and is referred to as a hydrophobic copolymer polyelectrolyte (available as TAMOL™ 165A Dispersant from The Dow Chemical Company). |
| AD 2 | A liquid preformed aqueous polymer dispersant that includes 24.0% to less than or equal to 26.0% of proprietary polycarboxylate, sodium salt and 74.0% to 76.0% of water, and that has a pH from 9.5 to 10.8 and is referred to as a sodium salt of maleic anhydride copolymer (available as TAMOL™ 731A Dispersant from The Dow Chemical Company). |
| AD 3 | A liquid preformed aqueous polymer dispersant that includes greater than or equal to 34.0% to 36.0% of proprietary acrylic polymers, less than or equal to 0.2% of aqua ammonia, greater than or equal to 26.0% to 28.0% propanediol, and greater than or equal to 37.0% to 39.0% of water, and that has a pH from 9.3 to 9.8 and is referred to as a hydrophobic copolymer polyelectrolyte (available as TAMOL™ 681 Dispersant from The Dow Chemical Company). |
| AD 4 | A liquid preformed aqueous polymer dispersant that includes 29.0% to 31.0% of proprietary polycarboxylate, sodium salt and 69.0% to 71.0% of water, and that has a pH from 9.0 to 10.8 and is referred to as an anionic polyelectrolyte (available as TAMOL™ 851 Dispersant from The Dow Chemical Company). |
| AD 5 | A liquid preformed aqueous polymer dispersant that includes 34.0% to 36.0% of proprietary salt of polycarboxylatic acid and 64.0% to 66.0% of water, and that has a pH from 6.5 to 7.5 and is referred to as an anionic polyelectrolyte (available as TAMOL™ 1254 Dispersant from The Dow Chemical Company). |
| AD 6 | A liquid preformed aqueous polymer dispersant that 25.0% to less than or equal to 29.0% of proprietary styrene/acrylic copolymers, less than or equal to 0.25% of aqua ammonia, greater than or equal to 1.0% to less than or equal to 2.0% dipropylene glycol monomethyl ether, and 71.0% to less than or equal to 75.0% of water, and that has a pH from 8.2 to 8.6 and is referred to as an hydrophobic copolymer dispersant (available as OROTAN ™ CA-2500 Dispersant from The Dow Chemical Company). |
| Polyol 1 | A polyoxypropylene polyether polyol, having a nominal hydroxyl functionality of 3 and a number average molecular weight of approximately 1000 g/mol (available as VORANOL™ 3150 from The Dow Chemical Company). |
| Polyol 2 | A glycerine initiated polyoxyethylene-polyoxypropylene polyether polyol, having an ethylene oxide content of approximately 60 wt%, a nominal hydroxyl functionality of 3, primary hydroxyl content of approximately 35%, and a number average molecular weight of approximately 1000 g/mol. |
| Polyol 3 | An polyoxypropylene-polyoxyethylene polyether polyol initiated with glycerine, having an ethylene oxide content of less than 20 wt%, a nominal hydroxyl functionality of 3, and a number average molecular weight of approximately 3100 g/mol (available as VORANOL™ 3136 from The Dow Chemical Company). |
| Isocyanate | A polymeric methylene diphenyl diisocyanate - PMDI (available as PAPI™ 94 from The Dow Chemical Company). |
| Surfactant | An organosilicone surfactant (available as Niax™ L-618 from Momentive Performance Materials). |
| Amine 1 | A tertiary amine catalyst (available Dabco® BL-11 from Air Products). |
| Amine 2 | A tertiary amine catalyst (available as Dabco® 33-LV from Air Products). |
| Tin | A tin catalyst (tin (II) octoate available as KOSMOS® 29 from Evonik Industries). |
| DI | Deionized Water. |

Working Examples 1 to 6 and Comparative Example A are prepared according to the approximate formulations in Table 1, below. In the Examples below, the total formulation mass is set to be 1900 grams. Working Examples 1 to 6 are prepared using one of AD 1, AD 2, AD 3, AD 4, AD 5, and AD 6, respectively, which are preformed aqueous polymer dispersants. Comparative Example A is prepared using only water, i.e., not using an aqueous polymer dispersant. The density of the samples range from approximately 2.7 to 3.2 lb/ft³ (according to ASTM D 3574).

**Table 1**

| | **Ex. 1** | **Ex. 2** | **Ex. 3** | **Ex.4** | **Ex. 5** | **Ex. 6** | **Ex. A** |
|---|---|---|---|---|---|---|---|
| **Isocyanate-Reactive Component** (amount based on parts by weight) | | | | | | | |
| AD 1 | 1.40 | - | - | - | - | - | - |
| AD 2 | - | 1.40 | - | - | - | - | - |
| AD 3 | - | - | 1.40 | - | - | - | - |
| AD 4 | - | - | - | 1.40 | - | - | - |
| AD 5 | - | - | - | - | 1.40 | - | - |
| AD 6 | - | - | - | - | - | 1.40 | - |
| DI | 1.12 | 1.15 | 1.48 | 1.22 | 1.30 | 1.17 | 2.20 |
| Polyol 1 | 20.00 | 20.00 | 20.00 | 20.00 | 20.00 | 20.00 | 20.00 |
| Polyol 2 | 60.00 | 60.00 | 60.00 | 60.00 | 60.00 | 60.00 | 60.00 |
| Polyol 3 | 20.00 | 20.00 | 20.00 | 20.00 | 20.00 | 20.00 | 20.00 |
| Surfactant | 0.80 | 0.80 | 0.80 | 0.80 | 0.80 | 0.80 | 0.80 |
| Amine 1 | 0.15 | 0.15 | 0.15 | 0.15 | 0.15 | 0.15 | 0.15 |
| Amine 2 | 0.05 | 0.05 | 0.05 | 0.05 | 0.05 | 0.05 | 0.05 |
| Tin | 0.05 | 0.05 | 0.05 | 0.05 | 0.05 | 0.05 | 0.05 |

| **Isocyanate Component** (amount based on parts by weight) | | | | | | | |
|---|---|---|---|---|---|---|---|
| Isocyanate | 52.01 | 52.01 | 52.01 | 52.01 | 52.01 | 52.01 | 52.01 |

| **Composition Properties** | | | | | | | |
|---|---|---|---|---|---|---|---|
| Approximate Total Parts | 156 | 156 | 156 | 156 | 156 | 156 | 155 |
| Index | 78 | 78 | 78 | 78 | 78 | 78 | 78 |
| AD wt% in Isocyanate-Reactive Component | 1.3 | 1.3 | 1.3 | 1.3 | 1.3 | 1.3 | - |
| Calculated Total Water Content (parts by weight) | 2.20 | 2.20 | 2.20 | 2.20 | 2.20 | 2.20 | 2.20 |

| **Foam Properties** | | | | | | | |
|---|---|---|---|---|---|---|---|
| Air Flow (scfm) | 5.9 | 5.8 | 4.6 | 5.8 | 4.8 | 9.5 | 3.6 |
| Average Resiliency (%) | 4 | 7 | 4 | 4 | 4 | 4 | 3 |
| Tensile Strength (psi) | 10.8 | 14.9 | 10.5 | 9.2 | 9.9 | 10.2 | 8.5 |
| Percent Elongation | 94 | 87 | 92 | 83 | 92 | 90 | 92 |
| Tear Strength (psi) | 1.32 | 1.53 | 1.38 | 1.02 | 1.06 | 1.20 | 1.10 |
| IFD @ 25% Deflection (lb) | 14 | 15 | 19 | 9 | 9 | 12 | 14 |
| IFD @ 65% Deflection (lb) | 28 | 31 | 37 | 19 | 19 | 24 | 27 |
| IFD @ 25% Return (lb) | 12 | 10 | 17 | 8 | 8 | 10 | 13 |

For each of Working Examples 1 to 6 and Comparative Examples A, foam samples are prepared by box foaming at ambient conditions, under a fume hood using a 38 cm x 38 cm x 24 cm (15" x 15" x 9.5") wooden box lined with clear plastic film. A 16-pin (4 pins each in four radial directions that are separated by 90°) mixer at high rotation speed is used at high rotation speed setting, together with a 1 gallon cup (16.5 cm diameter, 18 cm tall). The components in the Isocyanate-Reactive Component, with the exception of the Tin catalyst, are mixed first for 15 seconds at 2400 rpm. Then, the Tin catalyst is added and immediately mixed for another 15 seconds at 2400 rpm. Next, the Isocyanate Component is added and immediately mixed for another 3 seconds at 3000 rpm. Then, the mixed Isocyanate-Reactive Component and Isocyanate Component is poured into the box lined with plastic film. The foam is observed as having reached maximum height when bubbles appear at the top surface of the foam. Once foaming is complete, the foam is further allowed to cure overnight under the fume hood. Foam sample walls are discarded, and the remaining samples are characterized.

Calculated Total Water Content (parts by weight) is calculated as the total amount of DI (deionized water) added to the formulation plus the amount of water added to the formulation as part of the aqueous dispersant.

Air flow is a measure of the air that is able to pass through the foam under a given applied air pressure. Air flow is measured as the volume of air which passes through a 1.0 inch (2.54 cm) thick x 2 inch x 2 inch (5.08 cm) square section of foam at 125 Pa (0.018 psi) of pressure. Units are expressed in standard cubic feet per minute (scfm). A representative commercial unit for measuring air flow is manufactured by TexTest AG of Zurich, Switzerland and identified as TexTest Fx3300. Herein, air flow is measured according to ASTM D 3574.

Average resiliency is measured according to ASTM D 3574, in particular using the ball rebound test. Recovery time is measured is measured by releasing/returning the compression load head from a 75% position (i.e., the foam sample is compressed to 100 % minus 75 % of the sample's original thickness) to the position where foam compression is to a 10% position (based on the original thickness of the foam sample). The Recovery Time is defined as the time from the releasing/returning the compression load head to the moment that the foam pushes back against the load head with a force of at least 1 newton.

Tensile strength and percent elongation are measured according to ASTM D 3574. As used herein, the term "tear strength" is used herein to refer to the maximum average force required to tear a foam sample which is pre-notched with a slit cut lengthwise into the foam sample. The test results are determined according to the procedures of ASTM D3574-F in pound-force per linear inch (lb_{f}/in) or in newtons per meter (N/m).

IFD is referred to as indentation force deflection and it is measured according to ASTM D 3574. IFD is defined as the amount of force in pounds required to indent sample a certain percentage of the sample's original thickness using a fifty square inch circular plate. Herein, IFD is specified as the number of pounds at 25 % deflection and at 65% deflection for the foam sample. Lower IFD values are sought for viscoelastic foams. For example, an IFD at 25% from 6 to 12 may be used for bed pillows, thick back pillows, etc. An IFD at 25% from 12 to 18 may be used for medium thickness back pillows, upholstery padding, etc. An IFD at 25% from 18 to 24 may be used for thin back pillows, tufting matrix, very thick seat cushions, etc. An IFD at 25% greater than 24 may be used for average to firmer seat cushions, firm mattresses, shock absorbing foams, packaging foams, carpet pads, and other uses requiring ultra-firm foams.

IFD at 25% Return is the ability of the foam to recover. In particular, the IFD at 25% Return is measured as the percentage of the IFD at 25% that is recovered after cycling through the IFD at 65% measurement and returning to 25% compression.

## Claims

1. A reaction system for forming a viscoelastic polyurethane foam that has a resiliency of less than or equal to 20 % as measured according to ASTM D 3574, the reaction system comprising:
an isocyanate component that includes at least one isocyanate, an isocyanate index of the reaction system being from 50 to 110; and
an isocyanate-reactive component that is a mixture that is formed by adding at least a polyol component, an additive component, and a preformed aqueous polymer dispersant, the mixture including:
from 50.0 wt% to 99.8 wt% of the polyol component, based on the total weight of the mixture, the polyol component including at least one polyether polyol,
from 0.1 wt% to 49.9 wt% of the additive component, based on the total weight of the mixture, that includes at least one catalyst, and
from 0.1 wt% to 6.0 wt% of the preformed aqueous polymer dispersant having a pH from 6.0 to 12.0, based on the total weight of the mixture, the aqueous polymer dispersant including from 5 wt% to 60 wt% of a polymeric component and from 40 wt% to 95 wt% of a fluid medium that includes at least water, the polymeric component including at least one base polymer derived from 20 wt% to 100 wt% of at least one hydrophilic acid monomer having at least one carbonyl group, phosphate group, phosphonate group, or sulfonyl group, and optionally derived from at least one hydrophobic terminally unsaturated hydrocarbon monomer, wherein the preformed aqueous polymer dispersant is a continuous liquid phase component at ambient conditions of room temperature and atmospheric pressure.

2. The reaction system as claimed in any claim 1, wherein the preformed aqueous polymer dispersant is separately provided from the polyol component and the additive component.

3. The reaction system as claimed in any one of claims 1 to 2, wherein the additive component includes at least one surfactant.

4. The reaction system as claimed in any one of claims 1 to 3, wherein the additive component includes water that accounts for less than 2.0 wt% of the total weight of mixture.

5. The reaction system as claimed in any one of claims 1 to 4, wherein the hydrophilic acid monomer has at least one carbonyl group in the form of an acid anhydride group.

6. The reaction system as claimed in any one of claims 1 to 5, wherein the preformed aqueous polymer dispersant is a copolymer that includes two different hydrophilic acid monomers having at least one carbonyl group, phosphate group, phosphonate group, or sulfonyl group, or that includes one hydrophilic acid monomer having at least one carbonyl group, phosphate group, phosphonate group, or sulfonyl group, and at least one hydrophobic terminally unsaturated hydrocarbon monomer.

7. The reaction system as claimed in any one of claims 1 to 6, wherein the polyol component includes at least one polyoxyethylene-polyoxypropylene polyether polyol that has an ethylene oxide content of at least 50 wt%, has a nominal hydroxyl functionality from 2 to 4, and accounts for 35 wt% to 90 wt% of the isocyanate-reactive component.

8. The reaction system as claimed in any one of claims 1 to 7, wherein the polyol component includes a blend of at least three polyols, the blend including:
(i) a polyoxyethylene-polyoxypropylene polyether polyol that has an ethylene oxide content of at least 50 wt%, has a nominal hydroxyl functionality from 2 to 4, has a molecular weight from 700 g/mol to 1500 g/mol, and accounts for 35 wt% to 90 wt% of the isocyanate-reactive component,
(ii) a polyoxypropylene-polyoxyethylene polyether polyol that has an ethylene oxide content of less than 20 wt%, has a nominal hydroxyl functionality from 2 to 4, has a molecular weight greater than 1500 g/mol and less than 6000 g/mol, and accounts for 5 wt% to 50 wt% of the isocyanate-reactive component, and
(iii) a polyoxypropylene polyether polyol that has a nominal hydroxyl functionality from 2 to 4, has a molecular weight from 700 g/mol to 1500 g/mol, and accounts for 5 wt% to 50 wt% of the isocyanate-reactive component.

9. A viscoelastic polyurethane foam that has a resiliency of less than or equal to 20 %, as measured according to ASTM D 3574, prepared using the reaction system as claimed in any one of claims 1 to 8, the viscoelastic foam having an air flow of at least 0.127 m³/min (4.5 ft³/min) as measured according to ASTM D3574.

10. A method for forming a viscoelastic polyurethane foam that has a resiliency of less than 20 % as measured according to ASTM D 3574, the method comprising:
preparing an isocyanate-reactive component by adding and mixing at least a polyol component, an additive component, and a preformed aqueous polymer dispersant, the resultant mixture including:
from 50.0 wt% to 99.8 wt% of the polyol component, based on the total weight of the mixture, the polyol component including at least one polyether polyol,
from 0.1 wt% to 49.9 wt% of the additive component, based on the total weight of the mixture, that includes at least one catalyst and at least one surfactant, and
from 0.1 wt% to 6.0 wt% of the preformed aqueous polymer dispersant, based on the total weight of the mixture, the preformed aqueous polymer dispersant having a pH from 6.0 to 12.0, and including from 5 wt% to 60 wt% of a polymeric component and from 40 wt% to 95 wt% of a fluid medium that includes at least water, the polymeric component including at least one base polymer derived from 20 wt% to 100 wt% of at least one hydrophilic acid monomer having at least one carbonyl group, phosphate group, phosphonate group, or sulfonyl group, and optionally derived from at least one hydrophobic terminally unsaturated hydrocarbon monomer, wherein the preformed aqueous polymer dispersant is a continuous liquid phase component at ambient conditions of room temperature and atmospheric pressure;
providing an isocyanate component that includes at least one isocyanate such that an isocyanate index of the reaction system is from 50 to 110; and
allowing the isocyanate component to react with the isocyanate-reactive component to form the viscoelastic polyurethane foam.

## Patentansprüche

1. Ein Reaktionssystem zum Bilden eines viskoelastischen Polyurethanschaums, der eine Belastbarkeit von weniger als oder gleich 20 %, wie nach ASTM D 3574 gemessen, aufweist, wobei das Reaktionssystem Folgendes beinhaltet:
eine Isocyanatkomponente, die mindestens ein Isocyanat umfasst, wobei ein Isocyanatindex des Reaktionssystems 50 bis 110 beträgt; und
eine isocyanatreaktive Komponente, die eine Mischung ist, die durch Hinzufügen mindestens einer Polyolkomponente, einer Zusatzstoffkomponente und eines vorab gebildeten wässrigen Polymerdispersionsmittels gebildet wird, wobei die Mischung Folgendes umfasst:
zu 50,0 Gew.-% bis 99,8 Gew.-%, bezogen auf das Gesamtgewicht der Mischung, die Polyolkomponente, wobei die Polyolkomponente mindestens ein Polyetherpolyol umfasst,
zu 0,1 Gew.-% bis 49,9 Gew.-%, bezogen auf das Gesamtgewicht der Mischung, die Zusatzstoffkomponente, die mindestens einen Katalysator umfasst, und
zu 0,1 Gew.-% bis 6,0 Gew.-%, bezogen auf das Gesamtgewicht der Mischung, das vorab gebildete wässrige Polymerdispersionsmittel mit einem pH-Wert von 6,0 bis 12,0, wobei das wässrige Polymerdispersionsmittel zu 5 Gew.-% bis 60 Gew.-% eine Polymerkomponente und zu 40 Gew.-% bis 95 Gew.-% ein Fluidmedium, das mindestens Wasser umfasst, umfasst, wobei die Polymerkomponente mindestens ein Basispolymer umfasst, das zu 20 Gew.-% bis 100 Gew.-% von mindestens einem hydrophilen Säuremonomer mit mindestens einer Carbonylgruppe, Phosphatgruppe, Phosphonatgruppe oder Sulfonylgruppe abgeleitet ist und wahlweise von mindestens einem hydrophoben, terminal ungesättigten Kohlenwasserstoffmonomer abgeleitet ist, wobei das vorab gebildete wässrige Polymerdispersionsmittel bei Umgebungsbedingungen von Raumtemperatur und Atmosphärendruck eine kontinuierliche Flüssigphasenkomponente ist.

2. Reaktionssystem gemäß Anspruch 1, wobei das vorab gebildete wässrige Polymerdispersionsmittel separat von der Polyolkomponente und der Zusatzstoffkomponente bereitgestellt wird.

3. Reaktionssystem gemäß einem der Ansprüche 1 bis 2, wobei die Zusatzstoffkomponente mindestens ein Tensid umfasst.

4. Reaktionssystem gemäß einem der Ansprüche 1 bis 3, wobei die Zusatzstoffkomponente Wasser umfasst, das weniger als 2,0 Gew.-% des Gesamtgewichts der Mischung ausmacht.

5. Reaktionssystem gemäß einem der Ansprüche 1 bis 4, wobei das hydrophile Säuremonomer mindestens eine Carbonylgruppe in Form einer Säureanhydridgruppe aufweist.

6. Reaktionssystem gemäß einem der Ansprüche 1 bis 5, wobei das vorab gebildete wässrige Polymerdispersionsmittel ein Copolymer ist, das zwei unterschiedliche hydrophile Säuremonomere mit mindestens einer Carbonylgruppe, Phosphatgruppe, Phosphonatgruppe oder Sulfonylgruppe umfasst oder das ein hydrophiles Säuremonomer mit mindestens einer Carbonylgruppe, Phosphatgruppe, Phosphonatgruppe oder Sulfonylgruppe und mindestens ein hydrophobes, terminal ungesättigtes Kohlenwasserstoffmonomer umfasst.

7. Reaktionssystem gemäß einem der Ansprüche 1 bis 6, wobei die Polyolkomponente mindestens ein Polyoxyethylen-Polyoxypropylen-Polyetherpolyol umfasst, das einen Ethylenoxidgehalt von mindestens 50 Gew.-% aufweist, eine nominelle Hydroxylfunktionalität von 2 bis 4 aufweist und 35 Gew.-% bis 90 Gew.-% der isocyanatreaktiven Komponente ausmacht.

8. Reaktionssystem gemäß einem der Ansprüche 1 bis 7, wobei die Polyolkomponente ein Gemisch aus mindestens drei Polyolen umfasst, wobei das Gemisch Folgendes umfasst:
(i) ein Polyoxyethylen-Polyoxypropylen-Polyetherpolyol, das einen Ethylenoxidgehalt von mindestens 50 Gew.-% aufweist, eine nominelle Hydroxylfunktionalität von 2 bis 4 aufweist, ein Molekulargewicht von 700 g/mol bis 1500 g/mol aufweist und 35 Gew.-% bis 90 Gew.-% der isocyanatreaktiven Komponente ausmacht,
(ii) ein Polyoxypropylen-Polyoxyethylen-Polyetherpolyol, das einen Ethylenoxidgehalt von weniger als 20 Gew.-% aufweist, eine nominelle Hydroxylfunktionalität von 2 bis 4 aufweist, ein Molekulargewicht von mehr als 1500 g/mol und weniger als 6000 g/mol aufweist und 5 Gew.-% bis 50 Gew.-% der isocyanatreaktiven Komponente ausmacht, und
(iii) ein Polyoxypropylen-Polyetherpolyol, das eine nominelle Hydroxylfunktionalität von 2 bis 4 aufweist, ein Molekulargewicht von 700 g/mol bis 1500 g/mol aufweist und 5 Gew.-% bis 50 Gew.-% der isocyanatreaktiven Komponente ausmacht.

9. Ein viskoelastischer Polyurethanschaum, der eine Belastbarkeit von weniger als oder gleich 20 %, wie nach ASTM D 3574 gemessen, aufweist, hergestellt unter Verwendung des Reaktionssystems gemäß einem der Ansprüche 1 bis 8, wobei der viskoelastische Schaum einen Luftstrom von mindestens 0,127 m³/min (4,5 ft³/min), wie nach ASTM D3574 gemessen, aufweist.

10. Ein Verfahren zum Bilden eines viskoelastischen Polyurethanschaums, der eine Belastbarkeit von weniger als 20 %, wie nach ASTM D 3574 gemessen, aufweist, wobei das Verfahren Folgendes beinhaltet:
Herstellen einer isocyanatreaktiven Komponente durch Hinzufügen und Mischen mindestens einer Polyolkomponente, einer Zusatzstoffkomponente und eines vorab gebildeten wässrigen Polymerdispersionsmittels, wobei die resultierende Mischung Folgendes umfasst:
zu 50,0 Gew.-% bis 99,8 Gew.-%, bezogen auf das Gesamtgewicht der Mischung, die Polyolkomponente, wobei die Polyolkomponente mindestens ein Polyetherpolyol umfasst,
zu 0,1 Gew.-% bis 49,9 Gew.-%, bezogen auf das Gesamtgewicht der Mischung, die Zusatzstoffkomponente, die mindestens einen Katalysator und mindestens ein Tensid umfasst, und
zu 0,1 Gew.-% bis 6,0 Gew.-%, bezogen auf das Gesamtgewicht der Mischung, das vorab gebildete wässrige Polymerdispersionsmittel, wobei das vorab gebildete wässrige Polymerdispersionsmittel einen pH-Wert von 6,0 bis 12,0 aufweist und zu 5 Gew.-% bis 60 Gew.-% eine Polymerkomponente und zu 40 Gew.-% bis 95 Gew.-% ein Fluidmedium, das mindestens Wasser umfasst, umfasst, wobei die Polymerkomponente mindestens ein Basispolymer umfasst, das zu 20 Gew.-% bis 100 Gew.-% von mindestens einem hydrophilen Säuremonomer mit mindestens einer Carbonylgruppe, Phosphatgruppe, Phosphonatgruppe oder Sulfonylgruppe abgeleitet ist und wahlweise von mindestens einem hydrophoben, terminal ungesättigten Kohlenwasserstoffmonomer abgeleitet ist, wobei das vorab gebildete wässrige Polymerdispersionsmittel bei Umgebungsbedingungen von Raumtemperatur und Atmosphärendruck eine kontinuierliche Flüssigphasenkomponente ist;
Bereitstellen einer Isocyanatkomponente, die mindestens ein Isocyanat umfasst, sodass ein Isocyanatindex des Reaktionssystems 50 bis 110 beträgt; und
Erlauben, dass die Isocyanatkomponente mit der isocyanatreaktiven Komponente zu dem viskoelastischen Polyurethanschaum reagiert.

## Revendications

1. Un système réactionnel pour former une mousse viscoélastique de polyuréthane qui a une résilience inférieure ou égale à 20 % telle que mesurée conformément à l'ASTM D 3574, le système réactionnel comprenant :
un composé isocyanate qui inclut au moins un isocyanate, un indice isocyanate du système réactionnel allant de 50 à 110 ; et
un composé réactif aux isocyanates qui est un mélange qui est formé par ajout d'au moins un composé polyol, un composé additif, et un dispersant polymère aqueux préformé, le mélange incluant :
de 50,0 % en poids à 99,8 % en poids du composé polyol, rapporté au poids total du mélange, le composé polyol incluant au moins un polyéther polyol,
de 0,1 % en poids à 49,9 % en poids du composé additif, rapporté au poids total du mélange, qui inclut au moins un catalyseur, et
de 0,1 % en poids à 6,0 % en poids du dispersant polymère aqueux préformé ayant un pH allant de 6,0 à 12,0, rapporté au poids total du mélange, le dispersant polymère aqueux incluant de 5 % en poids à 60 % en poids d'un composé polymère et de 40 % en poids à 95 % en poids d'un milieu fluide qui inclut au moins de l'eau, le composé polymère incluant au moins un polymère de base dérivé de 20 % en poids à 100 % en poids d'au moins un monomère acide hydrophile ayant au moins un groupe carbonyle, un groupe phosphate, un groupe phosphonate, ou un groupe sulfonyle, et facultativement dérivé d'au moins un monomère hydrocarboné hydrophobe à terminaisons insaturées, dans lequel le dispersant polymère aqueux préformé est un composé en phase liquide continue sous conditions ambiantes de température ambiante et de pression atmosphérique.

2. Le système de réaction tel que revendiqué dans la revendication 1, dans lequel le dispersant polymère aqueux préformé est fourni séparément du composé polyol et du composé additif.

3. Le système réactionnel tel que revendiqué dans n'importe laquelle des revendications 1 à 2, dans lequel le composé additif inclut au moins un tensioactif.

4. Le système réactionnel tel que revendiqué dans n'importe laquelle des revendications 1 à 3, dans lequel le composé additif inclut de l'eau qui représente moins de 2,0 % en poids du poids total du mélange.

5. Le système réactionnel tel que revendiqué dans n'importe laquelle des revendications 1 à 4, dans lequel le monomère acide hydrophile a au moins un groupe carbonyle sous forme d'un groupe anhydride d'acide.

6. Le système réactionnel tel que revendiqué dans n'importe laquelle des revendications 1 à 5, dans lequel le dispersant polymère aqueux préformé est un copolymère qui inclut deux monomères acides hydrophiles différents ayant au moins un groupe carbonyle, un groupe phosphate, un groupe phosphonate, ou un groupe sulfonyle, ou qui inclut un monomère acide hydrophile ayant au moins un groupe carbonyle, un groupe phosphate, un groupe phosphonate, ou un groupe sulfonyle, et au moins un monomère hydrocarboné hydrophobe à terminaisons insaturées.

7. Le système réactionnel tel que revendiqué dans n'importe laquelle des revendications 1 à 6, dans lequel le composé polyol inclut au moins un polyoxyéthylène-polyoxypropylène polyéther polyol qui a une teneur en oxyde d'éthylène d'au moins 50 % en poids, a une fonctionnalité hydroxyle nominale allant de 2 à 4, et représente de 35 % en poids à 90 % en poids du composé réactif aux isocyanates.

8. Le système réactionnel tel que revendiqué dans n'importe laquelle des revendications 1 à 7, dans lequel le composé polyol inclut un mélange homogène d'au moins trois polyols, le mélange homogène incluant :
(i) un polyoxyéthylène-polyoxypropylène polyéther polyol qui a une teneur en oxyde d'éthylène d'au moins 50 % en poids, a une fonctionnalité hydroxyle nominale allant de 2 à 4, a une masse moléculaire allant de 700 g/mol à 1 500 g/mol, et représente de 35 % en poids à 90 % en poids du composé réactif aux isocyanates,
(ii) un polyoxypropylène-polyoxyéthylène polyéther polyol qui a une teneur en oxyde d'éthylène inférieure à 20 % en poids, a une fonctionnalité hydroxyle nominale allant de 2 à 4, a une masse moléculaire supérieure à 1 500 g/mol et inférieure à 6 000 g/mol, et représente de 5 % en poids à 50 % en poids du composé réactif aux isocyanates, et
(iii) un polyoxypropylène polyéther polyol qui a une fonctionnalité hydroxyle nominale allant de 2 à 4, a une masse moléculaire allant de 700 g/mol à 1 500 g/mol, et représente de 5 % en poids à 50 % en poids du composé réactif aux isocyanates.

9. Une mousse viscoélastique de polyuréthane qui a une résilience inférieure ou égale à 20 %, telle que mesurée conformément à l'ASTM D 3574, préparée en utilisant le système réactionnel tel que revendiqué dans n'importe laquelle des revendications 1 à 8, la mousse viscoélastique ayant un écoulement d'air d'au moins 0,127 m³/min (4,5 pieds³/min) tel que mesuré conformément à l'ASTM D3574.

10. Une méthode de formation d'une mousse viscoélastique de polyuréthane qui a une résilience inférieure à 20 % telle que mesurée conformément à l'ASTM D 3574, la méthode comprenant :
la préparation d'un composé réactif aux isocyanates par ajout et mélange d'au moins un composé polyol, un composé additif, et un dispersant polymère aqueux préformé, le mélange résultant incluant :
de 50,0 % en poids à 99,8 % en poids du composé polyol, rapporté au poids total du mélange, le composé polyol incluant au moins un polyéther polyol,
de 0,1 % en poids à 49,9 % en poids d'un composé additif, rapporté au poids total du mélange, qui inclut au moins un catalyseur et au moins un tensioactif, et de 0,1 % en poids à 6,0 % en poids du dispersant polymère aqueux préformé, rapporté au poids total du mélange, le dispersant polymère aqueux préformé ayant un pH allant de 6,0 à 12,0, et incluant de 5 % en poids à 60 % en poids d'un composé polymère et de 40 % en poids à 95 % en poids d'un milieu fluide qui inclut au moins de l'eau, le composé polymère incluant au moins un polymère de base dérivé de 20 % en poids à 100 % en poids d'au moins un monomère acide hydrophile ayant au moins un groupe carbonyle, un groupe phosphate, un groupe phosphonate, ou un groupe sulfonyle, et facultativement dérivé d'au moins un monomère hydrocarboné hydrophobe à terminaisons insaturées, dans laquelle le dispersant polymère aqueux préformé est un composé en phase liquide continue sous conditions ambiantes de température ambiante et de pression atmosphérique ;
l'apport d'un composé isocyanate qui inclut au moins un isocyanate tel qu'un indice isocyanate du système réactionnel va de 50 à 110 ; et
le fait de laisser le composé isocyanate réagir avec le composé réactif aux isocyanates afin de former la mousse viscoélastique de polyuréthane.
